# EUROPEAN PATENT SPECIFICATION

(11) **EP 1 615 508 B1**
(45) Date of publication and mention of the grant of the patent: **15.04.2009**
(21) Application number: 04729324.6
(22) Date of filing: 23.04.2004
(51) Int. Cl.: A23L 1/00

(54) **MOISTURE-BARRIER COATING LAYER FOR FOODS**
FEUCHTIGKEITS-SPERRSCHICHTÜBERZUG FÜR NAHRUNGSMITTEL
COUCHE DE REVETEMENT FORMANT UNE BARRIERE CONTRE L'HUMIDITE POUR DES ALIMENTS

(30) Priority: 24.04.2003 NL 1023257
(43) Date of publication of application: 18.01.2006
(73) Proprietor: Nederlandse Organisatie voor Toegepast-Natuurwetenschappelijk Onderzoek TNO, 2628 VK Delft (NL)
(72) Inventor: DON, Johannes, Andreas, Clyde, NL-6871 TM Renkum (NL); NOORT, Martijn, Willem-Jan, NL-1213 AJ Hilversum (NL); PLIJTER-SCHUDDEMAT, Johanna, NL-3921 BA Elst (NL); VAN SON, Matheus, Wilhelmus, Louis, Jozef, NL-3438 XP Nieuwegein (NL); PLIJTER, Johannes, Jozef, NL-3921 BA Elst (NL)
(74) Representative: Winckels, Johannes Hubertus F.
(86) International application number: PCT/NL2004/000271
(87) International publication number: WO 2005/029975

(56) References cited:
- EP-A- 0 509 566
- WO-A-94/13150
- WO-A-94/16573
- WO-A-97/15198
- US-A- 4 293 572
- US-A- 4 396 633
- US-A- 5 662 953
- DATABASE WPI Section Ch, Week 197636 Derwent Publications Ltd., London, GB; Class D13, AN 1976-68290X XP002290069 & SU 491 371 A (MOSC FATS RES INST) 4 March 1976 (1976-03-04)

## Description

The invention relates to a method for preparing a food composite with components wherein between the components a moisture-barrier coating layer is applied.

The preservability of foods is, in addition to being enhanced by factors preventing decay, enhanced by measures reducing the diffusion of moisture through and/or from the product. For instance, a moisture impermeable package around a loaf of bread prevents it from dehydrating rapidly.

The use of a coating layer having moisture-barrier properties is particularly advantageous for composite foods in which the water content in the various components is different and may not alter significantly during storage. A moisture-barrier coating layer in or on a food must purely consist of edible ingredients and be edible as a whole as well.

To realize this, a number of products, typically based on fat (i.e. chocolate and mayonnaise), are used to keep different components in composite foods having different moisture contents separated from each other. However, in practice, the moisture resistance of these so-called moisture-barriers is found to be too low of too limited applicability or too short in duration. A moisture-barrier protective layer consisting of, for instance, chocolate can be affected by temperature and, moreover, has a highly characteristic flavour which is not always desired. Mayonnaise can penetrate into the surrounding food or be incorporated therein, thereby causing, over time, the moisture-barrier protective layer to become thinner. For that reason, the moisture-barrier action and applicability of a number of existing, edible moisture-barriers are limited and improvement is desired.

Alternative solutions are based on a reduction of the difference between the water activities (Aws) of the components between which transport of moisture is to be prevented. An example of such a solution consists in the reduction of the Aw of the stuffing of cake which is in contact with a moist component such as custard. In order to delay the transport of water, the stuffing is made to be extremely sweet which, because of the flavour, is often undesirable, or a very sweet jam is provided between the yellow pastry cream and a bottom of, in this case, a flan.

Much research in the field of edible moisture-barriers, inter alia for coating tablets, has been carried out by the pharmaceutical industry. For instance, British patent application 756082 describes that the moisture sensibility of tablets can be reduced by mixing the moisture-sensitive powders with a solution of a prolamin in alcohol and then to process this into tablets.

Shellac, often in combination with hydroxypropyl cellulose, is also an often used biopolymer in the application of a moisture-barrier coating on foods (see, inter alia, US 4,820,533). The combination of shellac with prolamin is used for this purpose as well (EP 0 090 559).

In the international patent application 95/23520, an ice cream composition is described in which sugar particles are present, encapsulated in a layer of butterfat. The sugar particles are very small (< 2000 µm). Owing to the layer of butterfat, the sugar is prevented from dissolving in the ice cream and causing the ice cream to have a lower melting point. The eventual product has the same flavour and mouthfeel properties as normal ice cream but can be kept in frozen condition easier.

There is a strong need for edible coating layers with a better moisture-barrier action, with a longer life span, with broader applicability, with a higher temperature stability and with a greater elasticity. To a large extent, this need is motivated by the growth of the market of composite foods, including convenience food. In such foods, moisture-containing ingredients are combined with dry ingredients. The occurrence of moisture migration or moisture diffusion through the food causes a rapid and considerable reduction of the flavour and the texture of the food and in particular of the dry ingredients.

According to the invention, is has now been found that water transport between components with a different moisture content in a composite food can be prevented, at least inhibited by using a coating layer between the two components, which coating layer is based on an acetoglyceride of a mixture of acetyoglycerides in which a particular, minimum amount of short-chain fatty acids is present.

Such a coating layer is more effective than coating layers based on heterogeneous fats, which is particularly surprising since it is known that, in general, in this field of application, acetoglycerides function less well than heterogeneous fats. In this connection, reference can be made to, for instance, WO 97/15198.

Accordingly the invention relates to a method according to claim 1. Preferably at least 30% of the fatty acid chains contains less than 10 carbo atoms.

Surprisingly, it has been found that a coating layer made in a method according to the invention is capable of preventing water transport between components in a composite food in a highly efficient manner and for a long period of time. Dry biscuits particles coated with a coating layer according to the invention, for instance, can remain dry and crunchy for a very long period of time even when they have been incorporated into a highly aqueous component such as custard or ice cream. In contrast with known, fat-based coating layers for inhibiting water transport in composite foods, a coating layer does not exhibit breakage during storage or through contact with a highly aqueous component of a food.

The presence of the coating layer has no or hardly any noticeable effect on the flavour experience of a food. The mouthfeel is basically not adversely affected either.

As stated, the coating layer comprises a specific mixture of acetoglycerides. Preferably, the coating layer consists substantially only of this acetoglyceride mixture. According to the invention, acetoglyceride is understood to mean a glycerol esterified with three fatty acids. At least 20%, preferably at least 30% of all fatty acids in the acetoglyceride or of all fatty acids in the mixture of acetoglyceride, is short-chained.

It is desired that the mixture is homogeneous. This means that the different acetoglycerides are very thoroughly mixed together. Preferably, this condition is stable over time, so that the mixture substantially does not spontaneously separate.

The term short-chain fatty acid chain is understood to mean a fatty acid chain containing less than 10, preferably no more than 8 carbon atoms. Of the 20%, preferably 30% fatty acid chains mentioned, preferably at least half contains less than 4 carbon acids. The remaining fatty acid chains in the acetoglyceride or mixture of acetoglycerides are long-chain fatty acid chains, i.e. they contain at least 16, preferably between 16 and 22 carbon atoms.

In the mixture of acetoglycerides, no more than 20% by weight of mono and/or diglycerides are present, calculated on the mixture of acetoglycerides. It is particularly preferred that no single fatty acid chain at all is replaced with a hydroxyl group.

The mixture of acetoglycerides which is incorporated into a coating layer in a method according to the invention is solid. This means that under the conditions in which water transport in the eventual food is to be inhibited (the so-called application temperature) the acetoglyceride or mixture of acetoglycerides is solid. Often, the storage and consumption temperatures of the food will then be of importance. In this context, the term solid means that the mixture of acetoglycerides is for at least 40%, and preferably substantially entirely, in crystallized condition. For a description of the nature and possible preparation of acetoglycerides, reference is made to the international patent application 94/18290.and US patent 5,380,544.

Optionally, the coating layer can also contain suitable additives. Examples of such additives are emulsifiers, sugar, cocoa powder, aromatics, colorants, anti-oxidants and the like. These additives will always be present in small amounts, so that the coating layer consists of the above-described acetoglyceride or mixture of acetoglycerides for at least 95, preferably at least 99 % by weight, calculated on the weight of the coating layer.

For the application of the coating layer, first, a composition is prepared of all components desired in the coating layer. As a rule, this will only be the mixture of acetoglycerides. This composition is brought into a processible form, for instance by melting or by dissolving, dispersing or emulsifying in a suitable solvent. Examples of suitable solvents are solvents suitable to be used in foods and which can be easily removed through, for instance, evaporation. Specific examples are water and ethanol. When a solvent is used, the solution, dispersion or emulsion of the mixture of acetoglycerides will contain between 10 and 99% by weight, preferably between 50 and 90 % by weight of the mixture of acetoglycerides, calculated on the weight of the solution, dispersion or emulsion.

The processible (liquid) composition can be applied in a suitable manner to a component which is incorporated into a composite food according to the invention. This can be done by means of coating with the aid of a liquid curtain, in a fluidized bed, through panning, spreading, spraying, spouting, atomizing, immersing, brushing and/or rolling. This is done at a temperature above the melting point of the mixture of acetoglyceride used. The composition applied to the food is then cured or dried. Curing is done at a temperature below the crystallization temperature of the mixture of acetoglycerides (for instance between 0 and 15°C). Drying is done at a temperature below the melting temperature of the mixture of acetoglycerides. Preferably, the solvent used is substantially completely evaporated from the composition. After curing or evaporation of the solvent, a moisture-barrier, edible coating layer having the above-described properties remains behind on the food.

It is desired that, after having been applied to a component of a food which, as a rule, can also be considered to be a food in itself, the coating layer is not exposed to high temperatures, preferably not to a temperature above the melting temperature of the coating layer. This means that (if necessary) the component should, in advance, be boiled, baked, pasteurized or sterilized or must have undergone a different desired heat treatment.

Depending on the use, a thicker or thinner coating layer will be desired. A minimal thickness of ∼50 micrometers is possible. The maximally attainable thickness is a few millimeters. Preferably, the coating layer has a thickness between 50 and 2000 micrometers.

Foods on which or in which the moisture-barrier edible coating layer can preferably be used are composite foods in which the regulation of moisture migration is desired so as to maintain the product quality. Often, the moisture-barrier coating layer will be applied between different layers in the food or between different parts. It is possible to provide moisture-sensitive parts of a food in advance with a moisture-barrier coating layer and, thereupon, incorporate them into the food.

Foods onto which or in which a moisture-barrier edible coating layer according to the invention can be applied are, inter alia
- pastry and cake with a stuffing, and flan, pizza, quiche, waffle or pancake;
- bread with a stuffing including sausage roll and almond-paste pastry;
- fruits, chocolate, nuts, muesli, cereals, cornflakes, candy, processed in custard, ice cream, milk, icing, pudding, syrup, yogurt or other liquid or moisture containing products;
- ready-made sandwiches and toast, including pre-packaged bread rolls and sandwiches; and
- stuffed products such as candy bars or muesli-bars.

The invention will presently be elucidated further with reference to the following examples which should not be construed to be limitative.

### Examples

To compare the moisture-barrier properties of different coating layers, coating layers are applied to an application-model system. Here, a product with a low water activity (Aw) is coated with a coating layer and then exposed to a product with a high Aw. Due to the difference in Aw, water migration will occur in the direction of the product having a low A_{w}, decelerated, to a greater or lesser extent, by the presence of the coating layer. The rate at which the Aw of the product, initially having a low Aw, increases, is a measure for the moisture-barrier properties of the coating layer.

The application-model system used consists in a formed cookie, cast in bees wax in the cover of a Petri dish. A liquid composition for the preparation of a coating layer is applied to the surface of the cookie with the aid of a brush. When the layer has cured, the cover is put on the bottom of the Petri dish which is filled with a product with a high Aw. As the bees wax allows virtually no water migration, water can only migrate to the cookie by penetrating the coating layer. By measuring the Aw-value of the cookie as function of time, the moisture-barrier properties of the coating layer are determined.

In the experiment carried out according to the invention, acetoglycerides (Benefat 1H, Danisco Cultor) are provided in the application-model system, they were melted to that end until no solid phase was present any longer (70°C). Thereupon, the temperature was reduced until the desired temperature was obtained (50°C). With the aid of a brush, the material was applied to the surface of the cookies which, in advance, had been brought to the desired temperature. It was ensured that the temperature of the surface of the cookies was lower than the crystallisation temperature of the material that was applied. The coating layers were applied in two steps. A second amount was applied after the first amount had crystallised. The amount of acetoglyceride provided was 0.062 g/cm³. This yielded a maximum average layer thickness of 0.56 millimetres. As the material gradually penetrates into the cookie, this average layer thickness will, in reality, be lower, depending on the temperature of the coating layer and the surface of the cookie. When mention is made of a maximum average layer thickness, this is understood to mean the layer thickness that would be obtained if the material did not penetrate the cookie.

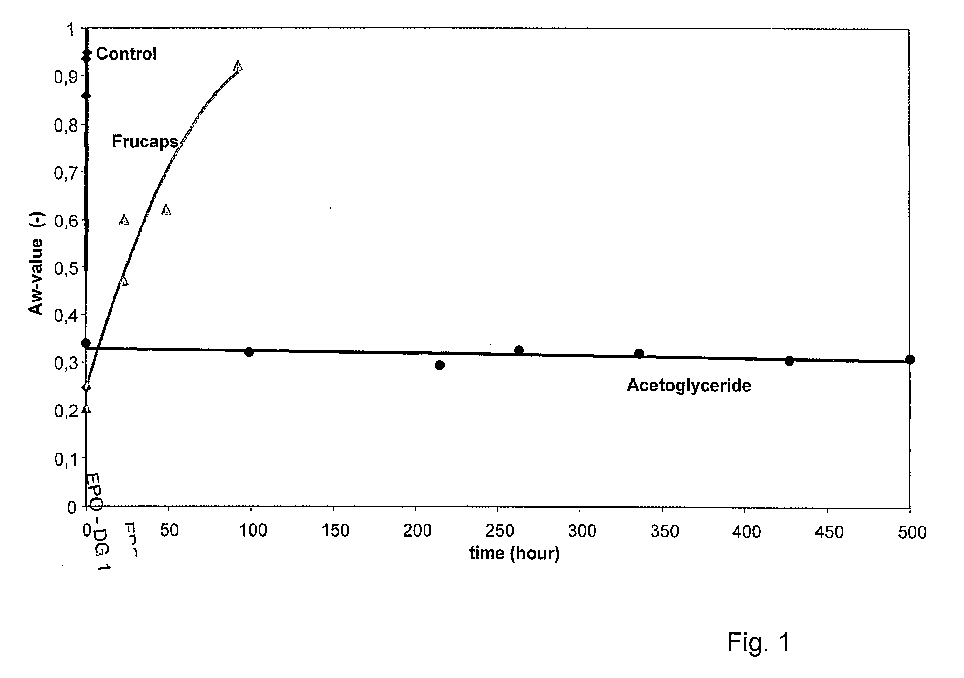

Thereupon, the Aw-value of the cookie was measured as function of time with an Aqualab CX-3 meter. Here, a circular sample was cut from the cookie in the application-model and stripped of the coating layer. The sample was cut up into little pieces whereupon the Aw-value was measured. Thereupon, a comparative experiment was carried out with heterogeneous fat (Frucaps). The results of the measurements are represented in Fig. 1. From Fig. 1 it appears that the results with acetoglycerides are indeed surprisingly better than those with heterogeneous fat (Frucaps).

## Claims

1. A method for preparing a food composite comprising components with a different moisture content, wherein, between the components a coating layer is applied for inhibiting water transport between the components at the application temperature of the food composite, which coating layer comprises a mixture of acetoglycerides in which at least 20% of the fatty acid chains contains less than 10 carbon atoms and wherein the mixture of acetoglycerides contains less than 20% mono and/or diglycerides, which mixture of acetoglycerides is solid for at least 40% by weight at the application temperature of the food composite, wherein one of the components is provided with the coating layer through application of a liquid composition comprising the mixture of acetoglycerides whereby the liquid composition is applied to the component concerned at a temperature above the melting point of the mixture of acetoglycerides used and the composition is then cured at a temperature below the crystallization temperature of the mixture of acetoglycerides or dried at a temperature below the melting temperature of the mixture of acetoglycerides, whereby the coating layer so obtained is then exposed to another component having a different moisture content.

2. A method according to claim 1, wherein at least 10% of the fatty acid chains in the mixture of acetoglycerides contains less than 4 carbon atoms.

3. A method according to claim 2, wherein the mixture of acetoglycerides contains between 20 and 95% of fatty acid chains having from 2 to 10 carbon atoms and between 5 and 80% of fatty acid chains having from 16 to 22 carbon atoms.

4. A method according to any one of the preceding claims wherein the coating layer consists for at least 95% by weight of the mixture of acetoglycerides, calculated on the weight of the coating layer.

5. A method according to claim 4 wherein the coating layer consists for at least 99% by weight of the mixture of acetoglycerides, calculated on the weight of the coating layer.

6. A method according to any of the preceding claims, wherein the food comprises a component selected from ice cream, custard, milk, pudding and yoghurt.

## Patentansprüche

1. Verfahren zum Herstellen eines Lebensmittelverbundprodukts, das Komponenten mit verschiedenen Feuchtigkeitsgehalten umfasst, bei dem zwischen den Komponenten eine Beschichtungsschicht zum Hemmen von Wassertransport zwischen den Komponenten bei der Anwendungstemperatur des Lebensmittelverbundprodukts aufgebracht wird, wobei die Beschichtungsschicht eine Mischung von Acetoglyceriden umfasst, in denen mindestens 20% der Fettsäureketten weniger als 10 Kohlenstoffatome enthalten und die Mischung von Acetoglyceriden weniger als 20% Mono- und/oder Diglyceride enthält, wobei die Mischung von Acetoglyceriden bei der Anwendungstemperatur des Lebensmittelverbundprodukts zu mindestens 40 Gew.-% fest ist,
bei dem eine der Komponenten mit der Beschichtungschicht durch Aufbringung einer flüssigen Zusammensetzung versehen wird, die die Mischung von Acetoglyceriden umfasst, wobei die flüssige Zusammensetzung bei einer Temperatur oberhalb des Schmelzpunktes der Mischung der verwendeten Acetoglyceriden auf die betreffende Komponente aufgebracht wird und die Zusammensetzung dann bei einer Temperatur unterhalb der Kristallisationstemperatur der Mischung von Acetoglyceriden gehärtet wird oder bei einer Temperatur unterhalb der Schmelztemperatur der Mischung von Acetoglyceriden getrocknet wird,
bei dem die so erhaltene Beschichtungsschicht dann einer anderen Komponente mit verschiedenem Feuchtigkeitsgehalt ausgesetzt wird.

2. Verfahren nach Anspruch 1, bei dem mindestens 10% der Fettsäureketten in der Mischung von Acetoglyceriden weniger als 4 Kohlenstoffatome enthalten.

3. Verfahren nach Anspruch 2, bei dem die Mischung von Acetoglyceriden zwischen 20 und 95% Fettsäureketten, die 2 bis 10 Kohlenstoffatome aufweisen und zwischen 5 und 80% Fettsäureketten, die 16 bis 22 Kohlenstoffatome aufweisen enthält.

4. Verfahren nach einem der vorangehenden Ansprüche, bei dem die Beschichtungsschicht zu mindestens 95 Gew.-% aus der Mischung von Acetoglyceriden besteht, bezogen auf das Gewicht der Beschichtungsschicht.

5. Verfahren nach Anspruch 4, bei dem die Beschichtungsschicht zu mindestens 99 Gew.-% aus der Mischung von Acetoglyceriden besteht, bezogen auf das Gewicht der Beschichtungsschicht.

6. Verfahren nach einem der vorangehenden Ansprüche, bei dem das Lebensmittel eine Komponente ausgewählt aus Eis, Eierspeise, Milch, Pudding und Joghurt umfasst.

## Revendications

1. Procédé de préparation d'un composite alimentaire comprenant des composants ayant des teneurs en humidité différentes, dans lequel une couche de revêtement est déposée afin d'inhiber le transport d'eau entre les composants à la température d'emploi du composite alimentaire, laquelle couche de revêtement comprend un mélange d'acétoglycérides dans lequel au moins 20% des chaînes d'acides gras contiennent moins de 10 atomes de carbone et le mélange d'acétoglycérides contient moins de 20% de monoglycérides et/ou diglycérides, ledit mélange d'acétoglycérides étant solide pour au moins 40% en poids à la température d'emploi du composite alimentaire, un des composants étant doté de la couche de revêtement par le dépôt d'une composition liquide comprenant le mélange d'acétoglycérides, la composition liquide étant déposée sur le composant concerné à une température supérieure au point de fusion du mélange d'acétoglycérides utilisé puis polymérisée à une température inférieure à la température de cristallisation du mélange d'acétoglycérides ou séchée à une température inférieure à la température de fusion du mélange d'acétoglycérides, après quoi la couche de revêtement ainsi obtenue est exposée à un autre composant ayant une teneur en humidité différente.

2. Procédé selon la revendication 1, dans lequel au moins 10% des chaînes d'acides gras présentes dans le mélange d'acétoglycérides contiennent moins de 4 atomes de carbone.

3. Procédé selon la revendication 2, dans lequel le mélange d'acétoglycérides contient de 20 à 95% de chaînes d'acides gras ayant de 2 à 10 atomes de carbone et de 5 à 80% de chaînes d'acides gras ayant de 16 à 22 atomes de carbone.

4. Procédé selon l'une quelconque des revendications précédentes, dans lequel la couche de revêtement se compose à au moins 95% en poids du mélange d'acétoglycérides, rapporté au poids de la couche de revêtement.

5. Procédé selon la revendication 4, dans lequel la couche de revêtement se compose à au moins 99% en poids du mélange d'acétoglycérides, rapporté au poids de la couche de revêtement.

6. Procédé selon l'une quelconque des revendications précédentes, dans lequel l'aliment comprend un composant choisi parmi une crème glacée, un flan, du lait, un dessert et un yaourt.
